# EUROPEAN PATENT APPLICATION

(11) **EP 3 352 336 A1**
(43) Date of publication of application: **25.07.2018**
(21) Application number: 16846122.6
(22) Date of filing: 29.07.2016
(51) Int. Cl.: H02K 1/27, F03D 1/06, F03D 9/25, H02K 1/22, H02K 1/32, H02K 21/16

(54) **ROTARY ELECTRIC MACHINE AND WIND POWER GENERATION SYSTEM**

(30) Priority: 17.09.2015 JP 2015183545
(71) Applicant: Hitachi, Ltd., Tokyo 100-8280 (JP)
(72) Inventor: HORI Masahiro, Tokyo 100-8280 (JP); KIMURA Mamoru, Tokyo 100-8280 (JP); MATSUMOTO Youichi, Tokyo 100-8280 (JP)
(74) Representative: Strehl Schübel-Hopf & Partner
(86) International application number: PCT/JP2016/072257
(87) International publication number: WO 2017/047249

(57) **Abstract**

Provided are a rotary electric machine and a wind power generation device with which the cooling performance and electrical characteristics can be improved. The rotary electric machine is characterized in that a rotor 6 is equipped with multiple rotor packets 14 arranged in the rotational axis direction, multiple permanent magnets 5 arranged in the rotor packets 14, and arranged with one pole in each of multiple permanent magnet insertion holes 4, first nonmagnetic parts 4b connected on the inner-diameter side of the permanent magnets 5 with respect to the permanent magnet insertion holes 4, and duct pieces 15a and 15b arranged between adjacent rotor packets 14 in the rotational axis direction, wherein the duct pieces are arranged extending farther to the inner-diameter side than a position on the inner-diameter side of the first nonmagnetic parts 4b, and/or are arranged extending farther to the outer-diameter side than a position on the outer-diameter side of the first nonmagnetic parts 4b.

## Description

### TECHNICAL FIELD

The present invention relates to a rotary electric machine and a wind power generation system, and in particular to a cooling mechanism in the rotary electric machine.

### BACKGROUND ART

In recent years, power generation systems such as a wind power generation or a photovoltaic power generation using natural energy have gained attention in order to prevent global warming. Among these, in the wind power generation system using wind power, permanent magnet rotary electric machines with a large capacity have begun to be used as a generator in order to increase the amount of power generation per nacelle, that is, to reduce the weight of the nacelle.

Since a large loss occurs to permanent magnet generators with a large capacity, reduction in their size without consideration has a problem of a rise in their internal temperature accompanying an increase in loss density. In particular, the permanent magnet has a lower magnetic flux density as the temperature rises, and irreversible demagnetization in which the reduced magnetic flux density does not return occurs to the permanent magnet when the temperature exceeds the specified value, requiring maintenance such as replacement of the rotor. Therefore, in order to make a permanent magnet rotary electric machine with high heat generation density, it is necessary to enhance the cooling function. As a solution to this problem, provided is a method of installing a radial duct in the rotary electric machine.

A configuration for realizing such a cooling function includes ones described in, for example, PATENT LITERATURE 1 and PATENT LITERATURE 2. PATENT LITERATURE 1 discloses a permanent magnet rotary electric machine having a rotor of a rotary electric machine, where the permanent magnet rotary electric machine includes a rotor core including a plurality of iron core blocks, a duct member that is disposed between two adjacent iron core blocks among the plurality of iron core blocks, and which includes a circular duct plate, and a plurality of duct pieces radially disposed on the circular duct plate, a plurality of permanent magnets embedded in the plurality of iron core blocks, and a plurality of through holes formed in the duct plate and through which the plurality of permanent magnets can make an insertion.

PATENT LITERATURE 2 discloses a permanent magnet rotary electric machine including a stator 1, a rotor 2 where a plurality of rotor cores 5 with magnet insertion holes 4 are stacked in layers with a gap which is formed by interposing duct pieces between the rotor cores 5, and permanent magnets 3 inserted into the magnet insertion holes 4, in which at least one of the duct pieces is disposed on a line extending from the center of the rotor core 5 to the outer circumference side, the magnet insertion holes 4 are formed on both sides of the duct piece so as to depart from the duct pieces as the magnet insertion holes extend from the center of the rotor cores 5 to the outer circumference side, and the magnet insertion holes 4 are disposed so as to shift from the duct pieces in the circumferential direction of the rotor 2 and have inner circumference side gap portion having the length in the circumferential direction wider than the circumferential thickness of the permanent magnets 3 toward the duct piece from the inner circumference ends of the permanent magnets 3.

### CITATION LIST

### PATENT LITERATURE

PATENT LITERATURE 1: JP-A-2015-115973
PATENT LITERATURE 2: JP-A-2015-130774

### SUMMARY OF INVENTION

### TECHNICAL PROBLEM

It is effective to provide a duct piece so as to form a path through which cooling wind escapes in a radial direction, thereby contributing to an improvement in cooling performance. On the other hand, in PATENT LITERATURE 1, with regard to electrical characteristics, a nonmagnetic part is not provided on the radially inward side of the permanent magnet, and reduction in radially inward leakage magnetic flux is not taken into consideration. Further, in PATENT LITERATURE 2, although the gap portion is provided on the radially inward side of the permanent magnet, a duct piece is provided radially through the gap portion, and the duct piece may serve as a path of leakage magnetic flux. It is, therefore, an object of the present invention to provide a rotary electric machine and a wind power generation system capable of improving cooling performance and improving electrical characteristics.

### SOLUTION TO PROBLEM

To solve the problem, a rotary electric machine includes: a rotation shaft; a rotor that rotates around the rotation shaft; and a stator in which a coil is provided in a plurality of slots provided in a stator core faced with the rotor with a predetermined gap, wherein the rotor includes: a plurality of rotor packets disposed in the direction of the rotation shaft, a plurality of permanent magnets disposed in the rotor packets and disposed in a plurality of permanent magnet insertion holes for each pole, a first nonmagnetic part connected to each permanent magnet insertion hole on a radially inward side of each permanent magnet, and a duct piece disposed between the rotor packets adjacent to each other in a direction of the rotation shaft, and the duct piece extends further radially inward from a radially inward position beyond the first nonmagnetic part and/or extends further radially outward from a radially outward position beyond the first nonmagnetic part.

Further, a wind power generation system according to the present invention includes a rotor that rotates by receiving wind, a nacelle rotatably supporting the rotor, a tower rotatably supporting the nacelle, and an electric generator that generates electric power using a rotational force of the rotor, where the electric generator is the rotary electric machine.

### ADVANTAGEOUS EFFECTS OF INVENTION

The present invention can provide a rotary electric machine and a wind power generation system capable of improving cooling performance and improving electrical characteristics.

### BRIEF DESCRIPTION OF DRAWINGS

[FIG. 1] FIG. 1 is a radial cross-sectional view of a permanent magnet rotary electric machine according to a first example of the rotary electric machine of the present invention.
[FIG. 2] FIG. 2 is an axial cross-sectional view of the rotary electric machine according to the first example of the present invention.
[FIG. 3] FIG. 3 shows two packets of a rotor core of the rotary electric machine according to the first example of the present invention.
[FIG. 4] FIG. 4 shows one packet with two poles of the rotor core of the rotary electric machine according to the first example of the present invention.
[FIG. 5] FIG. 5 is a graph showing a no-load induced voltage with respect to a distance between duct pieces according to the first example of the present invention.
[FIG. 6] FIG. 6 is a schematic configuration view of a wind power generation system employing a generator system of the present invention (second example).

### DESCRIPTION OF EMBODIMENTS

Hereinafter, a permanent magnet rotary electric machine and a wind power generation system of the present invention will be described on the basis of the illustrated examples. In each of the examples, the same components will be described using the same reference numerals. The following is merely an example, and it is not intended to limit the embodiments of the present invention to the following specific embodiments.

### First Example

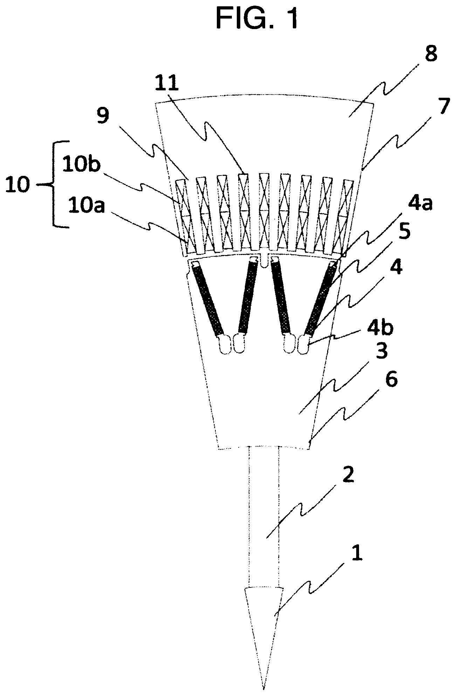

FIG. 1 is a rotary electric machine according to a first example of the present invention. Although the present invention is not limited to this example, a large-capacity permanent magnet rotary electric machine with a power of mainly several hundred kW to several tens of MW is described in this example. As shown in FIG. 1, the rotary electric machine mainly includes a shaft 1 serving as a rotation shaft, a rotor 6 that rotates around the rotation shaft via the shaft arm 2 as the shaft 1 rotates and which has a permanent magnet 5, and a stator 7 faced with the rotor 6 on a radially outward side of the rotor 6 with a predetermined gap between the stator 7 and the rotor 6.

The stator 7 is a distributed winding stator in which the stator coils 10 are in a distributive manner wound around a plurality of stator teeth (slots) 9 arranged in the stator core 8, and the distributed winding is made to continue in the circumferential direction. The coil 10 has a 3-phase winding of UVW, and, in the structure shown in the present example, as an example, a case in which the number of slots is 162, and 36 magnetic poles are electrically made is described. Understandably, the present invention is not limited to this number of slots and this number of magnetic poles. In addition, with the coil 10, two upper and lower coils, that is, an upper coil 10a and a bottom coil 10b, are disposed in a stator slot 11 that is located between the stator teeth 9.
Further, although the present example is described with an example of the distributed winding stator, the method of winding is not limited to this distributed winding, and other methods of winding are possible. As another example, for example, provided is a concentrated winding in which a coil is concentrically wound around the stator teeth.

The rotor 6 includes a rotor core 3 connected to the shaft 1 through the shaft arm 2 and stacked in the axial direction of the shaft 1, and a plurality of permanent magnets 5 disposed inside a plurality of magnet insertion holes 4 that are arranged on the radially outward side in the inside of the rotor core 3, and the rotor rotates as the shaft 1 rotates. Note that any number of shaft arms 2 will do as long as the torque can be transmitted. In addition, in the present example, the configuration is such that magnets of the same polarity are disposed in a V-shape, and one pole is formed using two pieces of the permanent magnets 5. Understandably, it is not necessary to limit the number of permanent magnets to two, and two or more pieces of permanent magnets may be used. The permanent magnet insertion hole has a radially outward end 4a and a radially inward end 4b in addition to the portion where the permanent magnet is housed. The radially outward end 4a is connected to the permanent magnet insertion hole 4 on the radially outward side of the permanent magnet. The radially inward end 4b is connected to the permanent magnet insertion hole 4 on the radially inward side of the permanent magnet. A curved portion is provided around the radially outward end 4a and the radially inward end 4b, in particular, at the corners (that is, the corners are rounded). This is because in a case where the magnet insertion hole has a sharp edge, the stress concentrates at the corner portion, which may damage the rotor core. In addition, in this example, the surface of the outermost peripheral portion of the radially outward end 4a is substantially parallel to the outer periphery of the rotor, since the stress concentrates on the portion where the thickness of the rotor core is small. In addition, the surface of the radially inward end 4b is substantially parallel to a faced surface of the radially inward end of the adjacent magnet insertion hole within one pole. As a result, concentration of the stress can be further prevented. Both of a state in which the outermost peripheral surface of the radially outward end 4a is substantially parallel to the outer periphery of the rotor, and a state in which the surface of the radially inward end 4b is substantially parallel to the faced surface of the radially inward end of the adjacent magnet insertion hole within one pole are not required to implement. The effects can be obtained even when one of the two states is implemented. In addition, while in this example, the radially outward end 4a and the radially inward end 4b are hollow portions (air), they may be filled with resin or the like as long as they are nonmagnetic.

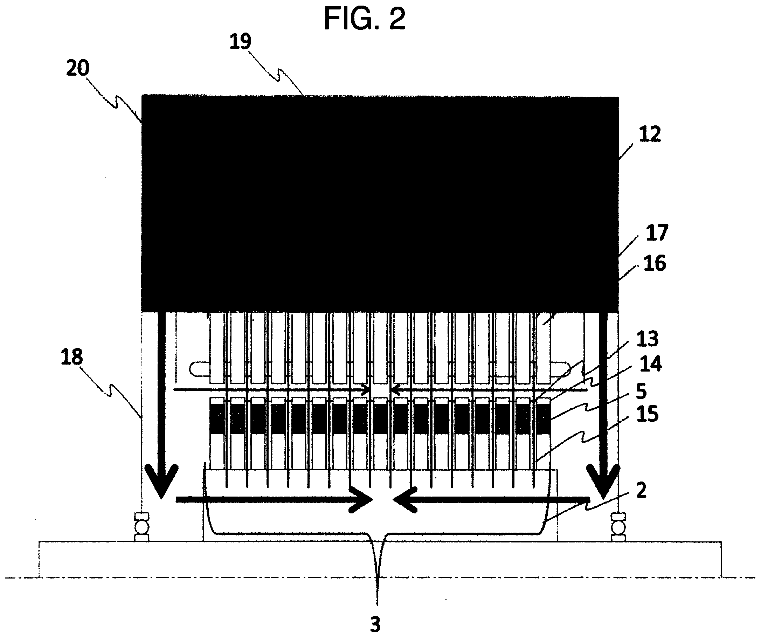

FIG. 2 is a sectional view along a shaft direction and a ventilation path of the permanent magnet rotary electric machine of the first example. The flow of the cooling wind is indicated by an arrow 12. In order to form the flow path (rotor radial duct 13) in the rotor, the rotor core 3 is divided into a plurality of rotor packets 14 in the axial direction, and the duct piece 15 is arranged between the rotor packets 14 adjacent to each other in the direction of the rotation shaft. The duct piece 15 is disposed in contact with each of the two rotor packets 14 adjacent to each other in the direction of the rotation shaft to form a radial duct (radial flow path). In a case where a duct plate is provided between a plurality of rotor packets 14 and a duct piece is further formed on the surface thereof, there is a possibility that the duct width of the radial duct narrows or the total shaft length of the rotary electric machine increases in order to maintain the duct width. In the present example, the duct piece 15 is disposed in contact with each of the two rotor cores 3 adjacent to each other in the direction of the rotation shaft, so that the rotary electric machine has a structure in which it easy to maintain the duct width while suppressing the total shaft length of the rotary electric machine from increasing.

In the stator, as with the rotor core 3, a stator core 8 is divided by a plurality of stator packets 16 in the axial direction, a duct piece (not shown) is arranged between the stator packets 16, and a flow passage is formed (stator radial duct 17). Note that in order to reduce the pressure loss in the flow path, it is preferable that the rotor radial duct 13 and the stator radial duct 17 are located at the same position in the axial direction.

The duct piece 15 is made of a magnetic material such as iron. The duct piece made of iron has a low unit price as compared with the one made of a non-magnetic material such as stainless steel, and its processing becomes easy, making cost reduction becomes possible.

A heat exchanger 19 for cooling the cooling wind 12 is arranged above a frame 18 of the permanent magnet rotary electric machine. The heat exchanger 19 discharges the heat of the permanent magnet rotary electric machine absorbed by the cooling wind to the outside. In addition, a fan 20 for circulating cooling wind is provided in the heat exchanger 19. The cooling wind forced out from the heat exchanger by this fan passes between the arms 2 in the rotor, flows into the rotor, flows through the rotor radial duct 13, and flows into the stator. Then, the cooling wind returns to the heat exchanger through the stator radial duct 17. The cooling wind 12 absorbs the heat of the permanent magnet 5, the rotor core 3, the stator core 8, and the coil 10, whereby the permanent magnet rotary electric machine can be cooled.

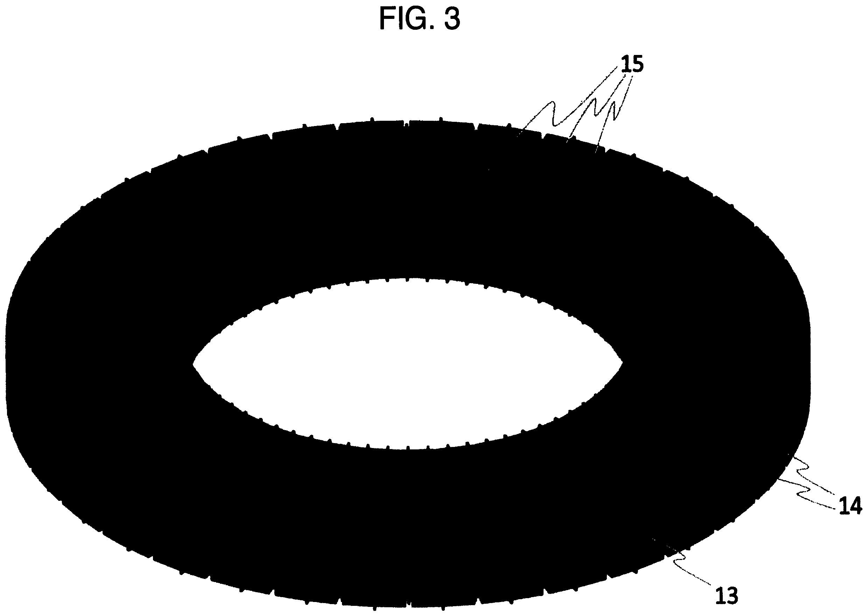

FIG. 3 shows the two rotor packets 14 stacked in the vertical direction according to the first example. The duct piece 15 is radially arranged on the surface of the axial end of a rotor packet 14. The space formed between the rotor packets by this duct piece 15 serves as the rotor radial duct 13. Note that the duct piece is fixed in a state in which a large pressure is applied to the axial end of the rotor core so that the core does not fall apart at the time of assembling the rotor core. It is necessary to dispose the duct piece 15 so that buckling of the rotor packet 14 and deformation of the duct piece 15 due to the pressure at this time is prevented. In other words, it is desirable that the total area of duct pieces between each packet contribute to withstand this pressure.

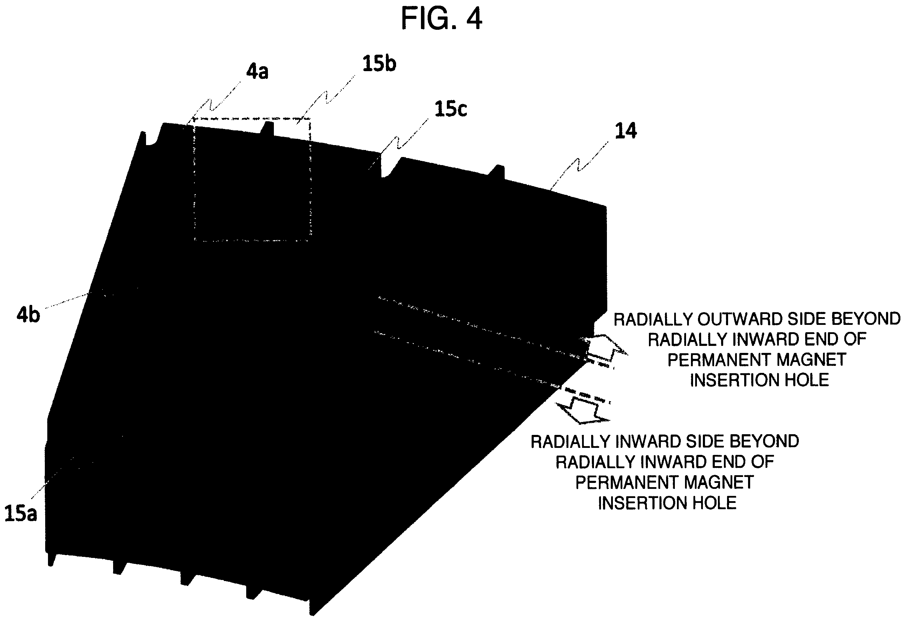

FIG. 4 shows part of a packet with adjacent two-poles in the rotor packet 14 according to the first example. In the rotor packet 14, a plurality of duct pieces are radially arranged. The duct pieces disposed between the two magnets (the center portion of the magnetic pole) forming one pole are disposed to be divided into a radially inward duct piece 15a extending further radially inward from a radially inward position beyond the radially inward end 4b of the permanent magnet insertion hole, and a radially outward duct pieces 15b extending further radially outward from a radially outward position beyond the radially inward end 4b of the permanent magnet hole. In addition, on the basis of a position where the radially inward ends 4b of the adjacent permanent magnet holes within one pole are faced with each other, the radially inward duct piece 15a extends further radially inward from the radially inward position beyond this faced position, and the radially outward duct pieces 15b extends further radially outward from the radially outward position beyond this faced position.

A path of a leakage magnetic flux where the magnetic flux of the magnet is shortcircuited within the rotor core 3 can be formed between the radially inward ends of the two magnet insertion holes forming one pole. Therefore, when the duct piece made of the magnetic material is disposed at this place, the duct piece increases the path of the leakage magnetic flux, resulting in that the leakage flux increases and the output of the electric generator lowers. Originally, narrowing the distance between the radially inward ends of the two magnet insertion holes to a certain extent makes magnetic saturation to be likely to occur, thereby making it possible to reduce the leakage magnetic flux as much as possible. However, in a case where the duct piece of a magnetic material is disposed through the radially inward ends of the two magnet insertion holes, the duct piece itself of the magnetic material becomes a path of the leakage magnetic flux. It is also conceivable that a portion between the radially inward ends of the two magnet insertion holes is eliminated to form one large magnet insertion hole, so that the portion does not become the path of the leakage magnetic flux. However, in consideration of strength characteristics, it is preferable that the radially inward ends of the two magnet insertion holes are provided, and an (iron core) member is also positioned between the two ends.

Therefore, this structure can prevent a decrease in output due to the duct piece of the permanent magnet rotary electric machine. In other words, in addition to improving a cooling performance originally provided by the duct piece, it is also expected to improve the electric characteristics. Therefore, it is also possible to further reduce the size and weight of, for example, a permanent magnet rotary electric machine.

Here, a plurality of radially outward duct pieces 15b located radially outward beyond the radially inward end of the magnet insertion hole may have the same length and the same shape. This increases the number of the duct pieces with the same length and shape, so that cost reduction due to mass production effect can be achieved and misplacement at the time of assembly can be prevented. Similarly, a similar effect can be obtained by using a plurality of radially inward duct pieces 15a which are located radially inward beyond the radially inward end of the magnet insertion hole and all of which have the same length and shape.

Further, in a case where the radially inward duct pieces 15a at the center of the magnetic pole and the radially outward duct pieces 15b have an insufficient strength, the duct piece 15c may be disposed between the poles.

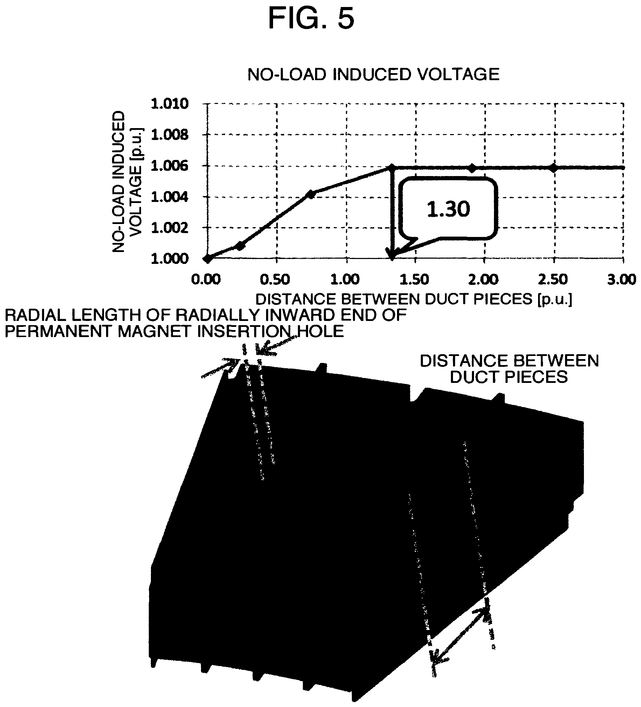

FIG. 5 shows the no-load induced voltage with respect to a distance (a distance between the duct pieces) between the duct piece 15a located radially inward beyond the radially inward end of the permanent magnet insertion hole and the duct piece 15b at the radially outward end of the permanent magnet insertion hole. As shown in FIG. 5, this distance is a distance between the radially outward end of the radially inward duct piece 15a and the radially inward end of the radially inward end of the radially outward duct piece 15b. Further, the distance between the duct pieces is standardized by the radial distance of the radially inward ends of the magnet insertion holes (the radial length of the faced surfaces of adjacent radially inward ends with respect to the faced surfaces as a reference). In addition, the no-load induced voltage is an induced electromotive force generated by the permanent magnet magnetic flux interlinking across the stator coil and is an index of how much the magnetic flux of the rotor go to the stator. From FIG. 5, it can be seen that as the distance between the duct pieces increases, the no-load induced voltage increases and levels off at about 1.3 p.u. (times) or more. Therefore, the distance between the duct pieces is desirably 1.3 p.u. (times) or more. Note that, in this example, the description has been made, as an example, where the duct piece is divided into the duct piece 15a located radially inward beyond the radially inward end 4b of the magnet insertion hole and the duct piece 15b located radially outward beyond the radially inward end 4b of the permanent magnet hole. Either one of the duct piece 15a and the duct piece 15b may be arranged.

### Second Example

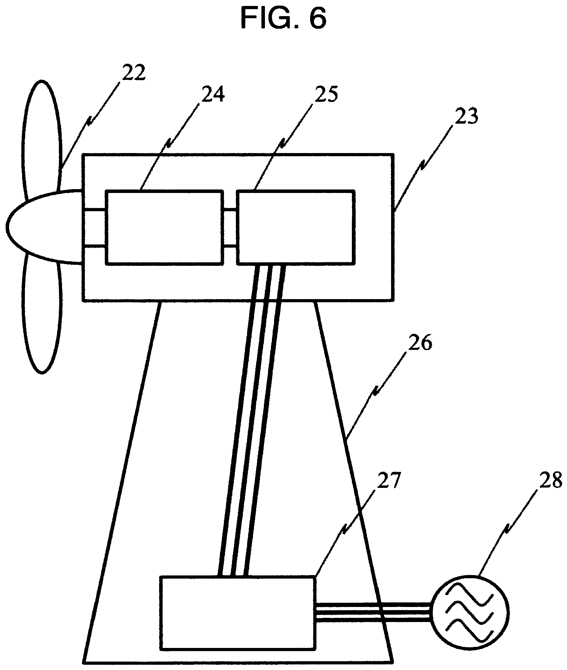

FIG 6 shows an example in which the present invention is applied to a wind power generation system. Rotation (mechanical) energy is transmitted to an electric generator 25 via a speed increasing device 24 stored in a nacelle 23 that rotatably supports a rotor 22 as the rotor 22 rotates by receiving wind. The electric generator 25 converts the mechanical energy resulting from the rotation of the rotor 22 into electrical energy, which is adjusted to the frequency and voltage corresponding to a system 28 by a power converter 27 housed in a tower 26 rotatably supporting a nacelle 23, and electric energy is sent to the system 28.

The permanent magnet rotary electric machine described in the first example is applied to the electric generator 25, thereby making it possible to reduce its size and weight. Accordingly, increasing the space inside the nacelle 23 and further reducing the weight of the nacelle at the top of the tower can simplify the tower 26, leading to a reduction in the cost of the entire wind power generation system.

### REFERENCE SIGNS LIST

- 1: shaft
- 2: shaft arm
- 3: rotor core
- 4: permanent magnet insertion hole
- 4a: radially outward end of permanent magnet insertion hole
- 4b: radially inward end of permanent magnet insertion hole
- 5: permanent magnet
- 6: rotor
- 7: stator
- 8: stator core
- 9: stator teeth
- 10: coil
- 10a: upper coil
- 10b: bottom coil
- 11: stator slot
- 12: cooling wind
- 13: rotor radial duct
- 14: rotor packet
- 15, 15a, 15b, 15c: duct piece
- 16: stator packet
- 17: stator radial duct
- 18: generator frame
- 19: heat exchanger
- 20: fan for circulating cooling wind
- 22: rotor
- 23: nacelle
- 24: speed increasing device
- 25: permanent magnet generator
- 26: tower
- 27: power converter
- 28: system

## Claims

1. A rotary electric machine comprising:
a rotation shaft;
a rotor that rotates around the rotation shaft; and
a stator in which a coil is provided in a plurality of slots provided in a stator core faced with the rotor with a predetermined gap,
wherein the rotor comprises:
a plurality of rotor packets disposed in the direction of the rotation shaft,
a plurality of permanent magnets disposed in the rotor packets and disposed in a plurality of permanent magnet insertion holes for each pole,
a first nonmagnetic part connected to each permanent magnet insertion hole on a radially inward side of each permanent magnet, and
a duct piece disposed between the rotor packets adjacent to each other in a direction of the rotation shaft, and
the duct piece extends further radially inward from a radially inward position beyond the first nonmagnetic part and/or extends further radially outward from a radially outward position beyond the first nonmagnetic part.

2. The rotary electric machine according to claim 1,
wherein the duct piece extends further radially inward from a radially inward position beyond a faced position of the first nonmagnetic parts adjacent to each other within one pole and/or extends further radially outward from a radially outward position beyond the faced position.

3. The rotary electric machine according to claim 1 or 2,
wherein the duct piece is formed of a magnetic material.

4. The rotary electric machine according to any one of claims 1 to 3,
wherein faced surfaces of the first nonmagnetic parts adjacent to each other within the one pole are formed substantially in parallel.

5. The rotary electric machine according to any one of claims 1 to 4, including
a second nonmagnetic part connected to each permanent magnet insertion hole on a radially outward side of each permanent magnet,
wherein a surface of an outermost peripheral portion of the second nonmagnetic part is formed substantially in parallel with an outer periphery of the rotor.

6. The rotary electric machine according to any one of claims 1 to 5, including
a duct piece disposed between poles in the rotor packets.

7. The rotary electric machine according to any one of claims 1 to 6,
wherein the duct piece has a plurality of radially outward duct pieces extending further radially outward from a radially outward position beyond the first nonmagnetic part, and
the radially outward duct pieces have a substantially equal length.

8. The rotary electric machine according to any one of claims 1 to 7,
wherein the duct piece has a plurality of radially inward duct pieces extending further radially inward from a radially inward position beyond the first nonmagnetic part, and
the radially inward duct pieces have a substantially equal length.

9. The rotary electric machine according to any one of claims 1 to 8,
wherein the duct piece comprises a first duct piece extending further radially inward from a radially inward position beyond the first nonmagnetic part, and a second duct piece extending further radially outward from a radially outward position beyond the first nonmagnetic part, and
a radial distance between the first duct piece and the second duct piece is 1.3 times or more of a radial length of the faced surfaces of the first nonmagnetic parts adjacent to each other within the one pole.

10. The rotary electric machine according to any one of claims 1 to 9,
wherein the duct piece is disposed in contact with each of the two rotor packets adjacent to each other in the direction of the rotation shaft.

11. A wind power generation system comprising:
a rotor that rotates by receiving wind;
a nacelle rotatably supporting the rotor;
a tower rotatably supporting the nacelle; and
an electric generator that generates electric power using a rotational force of the rotor,
wherein the electric generator is a rotary electric machine according to any one of claims 1 to 10.
